# EUROPÄISCHE PATENTSCHRIFT

(11) **EP 1 984 961 B1**
(45) Veröffentlichungstag und Bekanntmachung des Hinweises auf die Patenterteilung: **28.03.2012**
(21) Anmeldenummer: 06775890.4
(22) Anmeldetag: 23.08.2006
(51) Int. Cl.: H01L 41/09

(54) **ROTATORISCHE TRÄGHEITSANTRIEBSVORRICHTUNG**
ROTATORY INERTIA DRIVE DEVICE
DISPOSITIF D'ENTRAINEMENT INERTIEL ROTATIF

(30) Priorität: 24.08.2005 DE 102005040112
(43) Veröffentlichungstag der Anmeldung: 29.10.2008
(60) Teilanmeldung: 10179996.3
(73) Patentinhaber: SmarAct GmbH, 26125 Oldenburg (DE)
(72) Erfinder: RASS, Christoph, 26131 Oldenburg (DE); KORTSCHACK, Axel, 26121 Oldenburg (DE)
(74) Vertreter: Meissner, Bolte & Partner
(86) Internationale Anmeldenummer: PCT/DE2006/001471
(87) Internationale Veröffentlichungsnummer: WO 2007/022764

(56) Entgegenhaltungen:
- WO-A-00/54004
- WO-A-92/10874
- WO-A2-98/19347
- US-A1- 2005 007 683

## Beschreibung

Die Erfindung betrifft eine rotatorische Trägheitsantriebsvorrichtung mit einem Stator und einem relativ zum Stator beweglich gelagerten Rotor, mindestens einem mit dem Stator verbundenen Aktor und einer Steuerungseinheit zur Ansteuerung des Aktors gemäß Oberbegriff des Patentanspruchs 1.

Trägheitsantriebsvorrichtungen sind beispielsweise aus D. W. Pohl: Dynamic piezoelectric translation devices, in Review of Scientific Instruments, vol. 58 (1) January 1987, Seiten 54 bis 57 und aus Ph. Niedermann, R. Emch, P. Descouts: Simple piezoelectric translation device, in: Review of Scientific Instruments, vol. 59 (2) February 1988, Seiten 368 bis 369 bekannt. In diesen Dokumenten ist das Grundprinzip von linearen Trägheitsantriebsvorrichtungen beschrieben, bei dem ein piezoelektrischer Aktor vorgesehen ist, der mit einem sägezahnähnlichen periodischen Signal beaufschlagt wird und eine Beschleunigung relativ zu einem reibschlüssig mit dem Aktor verbundenen beweglich gelagerten Teil bewirkt. Bei einer niedrigen Beschleunigung des piezoelektronischen Aktors folgt das bewegliche Teil aufgrund des Reibschlusses dem Aktor. Bei einer hohen Beschleunigung des piezoelektrischen Aktors hingegen rutscht das bewegliche Teil relativ zum Aktor durch, sobald die Trägheitskraft des beweglichen Teils größer als die Reibungskraft zwischen beweglichen Teil und Aktor wird.

Neben den Trägheitsantrieben gibt es eine andere Klasse von piezobasierten Antriebsvorrichtungen für die Hochpräzisionspositionierung, die als Ultraschall- bzw. Schwingungsmotoren bezeichnet werden. Eine rotatorische Ausprägung besteht beispielsweise aus einem feststehenden Stator und einem beweglichen Rotor und einem am Stator befestigten piezokeramischen Aktor. Durch den piezoelektrischen Effekt wird das piezokeramische Element verformt. Durch Anlegen der Resonanzfrequenz einer mit dem Rotor in Kontakt stehenden Struktur kann eine elliptische Schwingung erzeugt werden, die auf den Rotor übertragen wird und den Rotor in eine Rotationsbewegung versetzt.

Derartige Ultraschallmotoren sind beispielsweise in US 4,210,837 A, US 4,453,103 A, US 4,959,580 A, US 6,867,532 B2 und CA 2 416 628 A1 beschrieben.

Das Antriebsprinzip der Ultraschallmotoren ist grundlegend anders als das Antriebsprinzip von rotatorischen Trägheitsantriebsvorrichtungen.

Trägheitsantriebsvorrichtungen werden in zwei Untergruppen unterteilt, nämlich die Impact-Drive-Antriebe und die Slip-Stick-Antriebe.

Der Impact-Drive-Antrieb besteht aus zwei Körpern A und B, die über eine Piezokeramik C verbunden sind. Der Körper A steht in Kontakt mit einer Oberfläche, über die er rutschen kann, wenn die statische Reibungskraft überwunden wird. Der zweite Körper B, der nicht mit der Oberfläche in Kontakt steht, kann durch die Verformung der Piezokeramik bewegt werden. So lange die Beschleunigung von B verhältnismäßig niedrig ist, wird dabei der Körper A aufgrund der Reibung nicht über die Oberfläche rutschen. Jedoch bei einer hohen Beschleunigung wird der Körper A über die Oberfläche gleiten, da die Trägheitskraft des Körpers B größer ist als die Reibungskraft. Wird nun der Körper B abwechselnd in die eine Richtung stark und in die andere Richtung weniger stark beschleunigt, so kann eine schrittweise Bewegung der gesamten Konstruktion erzielt werden.

Slip-Stick-Antriebe sind detailliert in A. Bergander: "Control wear testing and integration of slip-stick micropositioning", Dissertation Nr. 2843, EPFL Lausanne, Schweiz, 2003, sowie in der WO 2004/077584 beschrieben.

Die Bewegung der im Grunde leistungsfähigeren Slip-Stick-Antriebe setzt sich ebenfalls aus zwei Bewegungsarten zusammen, wobei eine abweichende Anordnung der Komponenten eine bessere Funktion der Positionierer ermöglicht. Bei Slip-Stick-Antrieben ist ein Aktor D in der Regel eine piezoelektrische Keramik auf einer Seite an einer nicht beweglichen Masse befestigt. Ein Körper E steht mit der Piezokeramik oder mit einem weiteren leichten, fest an der Piezokeramik befestigten Körper in Reibkontakt. Wird die piezoelektrische Keramik durch das Anlegen einer sich allmählich ändernden Spannung langsam verformt, so wird der Körper E mitbewegt. Dieser Modus wird häufig Feinpositioniermodus oder Scanmodus genannt. Der Körper E kann dabei mit einer sehr hohen Auflösung, kleiner als ein Nanometer, positioniert werden. Jedoch ist der Arbeitsbereich in diesem Modus in der Regel auf wenige Mikrometer beschränkt. Um diesen Nachteil auszugleichen, wird der sogenannte Grobpositioniermodus verwendet. Beim Grobpositioniermodus wird der piezokeramische Aktor D durch eine sich schnell ändernde elektrische Spannung verformt und dadurch die Masse des Körpers E beschleunigt. Wenn die Trägheitskraft des Körpers E größer als die Haftreibung ist, so kommt es zu einer relativen Bewegung zwischen dem Körper E und dem piezokeramischen Aktor D. Folgt regelmäßig auf eine hohe Beschleunigung des Körpers E in eine Richtung eine geringe Beschleunigung in entgegengesetzter Richtung, so kann eine Positionierung über einen theoretisch unbegrenzten Arbeitsbereich durchgeführt werden.

Diese Konstruktion weist gegenüber den Impact-Drive-Antrieben den Vorteil auf, dass die hohe mögliche Auflösung der Piezokeramik im Feinpositioniermodus genutzt werden kann, um mit eben dieser hohen Auflösung zu positionieren. Die Anordnung der Komponenten kann beim Slip-Stick-Antrieb verändert werden, ohne das Antriebsprinzip zu verletzen. Eine zweite mögliche Konfiguration sieht vor, den piezokeramischen Aktor oder einen an diesem Aktor befestigten, leichten Reibkörper beweglich auf eine Oberfläche oder in einer Führung zu lagern. Auf der anderen Seite des Aktors ist ein weiterer Körper befestigt. Durch eine asymmetrische Ansteuerung des Aktors kann eine hochauflösende Bewegung, speziell im Feinpositioniermodus, erzielt werden.

Slip-Stick-Antriebe, mit denen sich lineare Bewegungen erzeugen lassen, sind beispielsweise in US 5,237,238 A1, EP 0 747 977 A1, EP 0 823 738 B1 und der oben genannten WO 2004/077584 A1 beschrieben.

WO 00/54004 A1, WO 02/43162 A1 und WO 2004/077584 A1 offenbaren zudem Slip-Stick-Antriebe, mit denen sich rotatorische Bewegungen sowie eine Kombination von linearen und rotatorischen Bewegungen erzeugen lassen.

Slip-Stick-Antriebe stellen eine einfache Möglichkeit dar, über größere Distanzen zu positionieren. Indem der kleine Hub der Piezokeramik ausgenutzt wird, um viele kleine Schritte zu realisieren, können, wie oben bereits beschrieben, makroskopische Bewegungen realisiert werden.

Herkömmlicherweise ist, wie beispielsweise in der DE 199 09 913 B4 offenbart ist, die Piezokeramik so angeordnet, dass der Hub entweder in Bewegungsrichtung der linearen Bewegung oder tangential zur Rotation liegt. Zwar scheint die Struktur so zu wirken, als ob die Bewegungsrichtung umgelenkt wird, tatsächlich aber wirkt der Hub des Piezoelementes von vornherein tangential zur Drehachse.

Auch die DE 40 23 311 C2, US 5,410,206 A1 und die WO 02/43162 zeigen Ausführungsformen, bei denen der Hub der Piezokeramik tangential auf die zu bewegende Welle wirkt. Die Einschränkung, dass die Piezokeramik einen Hub in die Bewegungsrichtung aufweisen muss, wirkt nachteilig, denn es schränkt die möglichen Konstruktionen und Lösungen erheblich ein und resultiert häufig in nicht optimalen Konstruktionen.

Aufgabe der vorliegenden Erfindung ist es daher, eine verbesserte rotatorische Trägheitsantriebsvorrichtung zu schaffen.

Die Aufgabe wird mit einer rotatorischen Trägheitsantriebsvorrichtung gemäß der Merkmalskombination nach Patentanspruch 1 gelöst.

Durch den Einsatz einer solchen rotarischen Antriebsvorrichtung mit Umlenkeinheit zwischen Stator und Rotor ist es möglich, eine weitaus größere Bandbreite an Konfigurationen für Trägheitsantriebe zu realisieren. Die Trägheitsantriebe mit Umlenkeinheit haben den Vorteil einer kompakteren Bauform durch eine günstigere Anordnung der Komponenten. Zudem sind Piezokeramiken mit beliebige Bauform einsetzbar. Der Hub der Piezokeramik kann je nach Anforderung konstruktiv vergrößert, beibehalten oder verkleinert werden. Zudem kann der Hub der Piezokeramik auf mehrere Reibkontakte umgeleitet werden, so dass große Drehmomente übertragen werden können, ohne dass einzelne Reibkontakte mit sehr großer Kraft beaufschlagt werden müssen.

Somit ist es beispielsweise möglich, für einen rotatorischen Antrieb eine Piezokeramik zu verwenden, die sich radial zur Drehachse verformt. Im Unterschied zu den Schwingungsmotoren, bei denen Übertragungsglieder zwischen Aktor und im Stator und im Rotor zu Übertragung einer Wanderwelle oder Stehwelle auf den Rotor vorgesehen sind, ist die Umlenkeinheit der rotatorischen Trägheitsantriebsvorrichtung derart ausgebildet, dass sie in ständiger reibschlüssiger Verbindung mit einer Reibfläche des Rotors steht und starr mit dem Aktor gekoppelt ist, so dass bei Beaufschlagung des Aktors mit asymmetrischen Steuerungssignalen der Rotor Bewegungen in Folge niedriger Beschleunigungen der Umlenkeinheit aufgrund des Reibschlusses folgt und Bewegungen in Folge hoher Beschleunigungen der Umlenkeinheit unter Überwindung des Reibschlusses nicht folgt. Der piezokeramische Aktor einer rotatorischen Trägheitsantriebsvorrichtung hat hierzu üblicherweise eine hohe Steifigkeit bei geringer Masse, um die schnellen Änderungen im Ansteuerungssignal vom Aktor umzusetzen und an die Streben der Umlenkeinheit zu bringen. Beim Ultraschallantrieb ist hingegen nicht die Steifigkeit des Aktors entscheidend, sondern eine geringe Dämpfung. Für Trägheitsantriebe ist die Umlenkeinheit zudem möglichst leicht auszuführen, so dass sie von dem Aktor mit seiner beschränkten Kraft schnell bewegt werden kann. Darüber hinaus muss die Umlenkeinheit in ihrer Bewegungsrichtung möglichst steif sein, um ihrerseits am Reibkontakt hohe Beschleunigungen anbringen zu können. Die Übertragungsglieder der Ultraschall-Antriebe erfordern hingegen keine hohen Beschleunigungen am Reibkontakt. Vielmehr sind die Übertragungselemente hinsichtlich ihrer Resonanzfrequenzen so abzustimmen, dass die gewünschte mechanische Schwingung an der Wirkstelle erhalten wird.

Besonders vorteilhaft ist die Umlenkeinheit zur Verstärkung oder Reduzierung des Hubs des mindestens einen Aktors ausgestaltet. Mit der Umlenkeinheit kann somit eine Hebelwirkung erzielt werden, so dass bei sehr kleinen Auslenkungen des Aktors eine entsprechende Verstärkung oder Abschwächung der Bewegung erreicht werden kann.

Die Umlenkeinheit ist möglichst steif aufzubauen, um am Reibkontakt hohe Beschleunigungen anbringen zu können. Eine labile Struktur der Umlenkeinheit würde eine Fortbewegung gemäß dem Antriebsprinzip des Trägheitsantriebes nicht zulassen.

Die Symmetrie-Achse des mindestens einen Aktors und die Rotationsachse des Rotors sollten vorzugsweise zusammenfallen. Damit kann ein gleichmäßiges Beaufschlagen des Rotors mit einem Drehmoment ohne Unwuchten erreicht werden.

Der mindestens eine Aktor ist scheibenförmig und hat einen änderbaren Durchmesser, so dass die Bewegungsrichtung des Aktors radial ausgerichtet ist. Dies hat den Vorteil, dass Beschleunigungskräfte über den gesamten Umfang des Aktors, des durch den Aktor gebildeten Stators, der an den Aktor gekoppelten Umlenkeinheit und dem Rotor aufgebracht werden können.

Die Umlenkeinheit ist vorzugsweise derart ausgebildet, dass bei jeder Hublage des mindestens einen Aktors eine reibschlüssige Verbindung zwischen Rotor und Umlenkeinheit besteht. Nur durch die Trägheit des Rotors wird dann der Reibschluss zwischen Rotor und Umlenkeinheit überwunden, wobei immer noch die reibschlüssige Verbindung bestehen bleibt.

In einer bevorzugten Ausführungsform hat die Umlenkeinheit einen mit dem Stator verbundenen Grundkörper und integral mit dem Grundkörper verbundene Stege, die sich in eine diagonale Richtung im Winkel zur radialen oder tangentialen Richtung der Rotationsachse der Trägheitsantriebsvorrichtung zum Rotor hin erstrecken.

Die Umlenkeinheit hat vorzugsweise mindestens ein auf dem zur Verbindung der Stege mit dem Grundkörper gegenüberliegenden Ende der Stege mit den Stegen verbundenes Reibelement mit einer Reibfläche, die mit dem Rotor zusammenwirkt. Durch dieses am zum Rotor angrenzenden Ende des jeweiligen Stegs angeordnete Reibelement kann eine vergrößerte Reibfläche hergestellt werden.

Der Rotor besteht aus zwei drehbar um eine Achse gelagerten, im Abstand zueinander angeordneten, scheibenförmigen Rotorelementen, die im radialen äußeren Bereich einen einander zulaufenden geneigten oder gekrümmten Abschnitt haben. Ein scheibenförmiger, im Durchmesser veränderlicher Aktor ist zentrisch an der Achse befestigt und eine ringförmige Umlenkeinheit sitzt auf dem Außenumfang des Aktors. Die Umlenkeinheit hat diagonal nach außen ragende Stege, die im reibschlüssigen Eingriff mit dem geneigten oder gekrümmten Abschnitt der Rotorelemente stehen.

Hier wird die Anpresskraft zwischen Umlenkeinheit und Rotorelementen im Wesentlichen durch den geneigten oder gekrümmten Abschnitt definiert: Insbesondere bei dieser Trägsheitsantriebsvorrichtung kann die Anpresskraft zwischen Umlenkeinheit und Rotorelementen einfach durch eine weitere Vorrichtung eingestellt werden.

Besonders vorteilhaft ist es, wenn bei dieser Trägheitsantriebsvorrichtung zwei sich gegenüberliegende, mit zwischenliegendem scheibenförmigen Stator drehbar um die Achse angeordnete Rotoren vorgesehen ist. Damit kann eine erhöhte Seitensteifigkeit und ein höheres Drehmoment erzeugt werden.

Der mindestens eine Aktor kann ein piezokeramisches, elektrostriktives oder magnetostriktives Aktorelement sein.

Die Erfindung wird nachfolgend beispielhaft anhand der beigefügten Zeichnungen näher erläutert. Es zeigen:

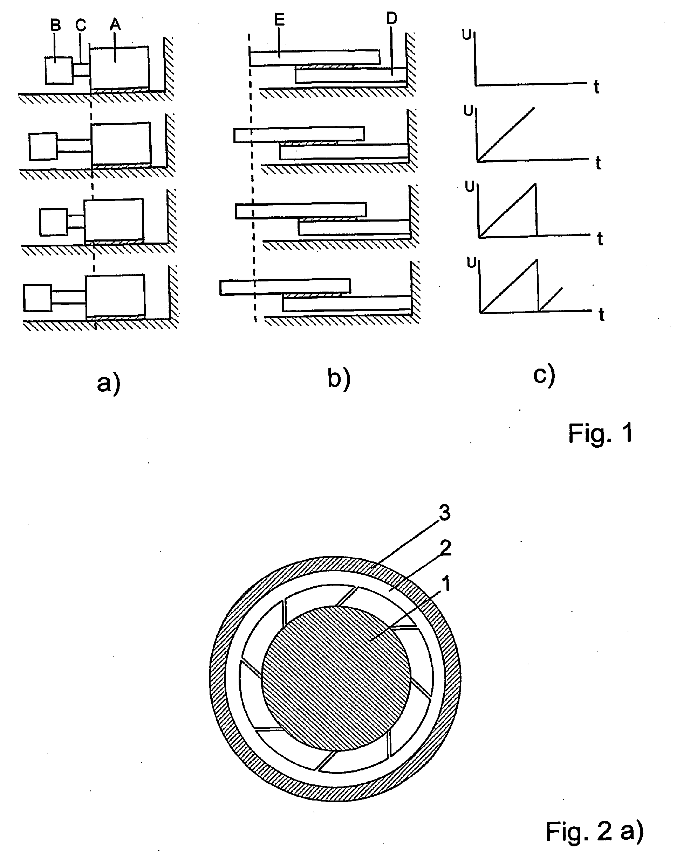

- Figur 1 a): Skizze des prinzipiellen Aufbaus eines Impact-Drive-Trägheitsantriebs;
- Figur 1 b): Skizze des prinzipiellen Aufbaus eines Slip-Stick-Trägheitsantriebs;
- Figur 1 c): Spannungsverlauf über der Zeit zur Ansteuerung der Trägheitsantriebe;
- Figur 2 a): Scheibe als zentrales Antriebselement;

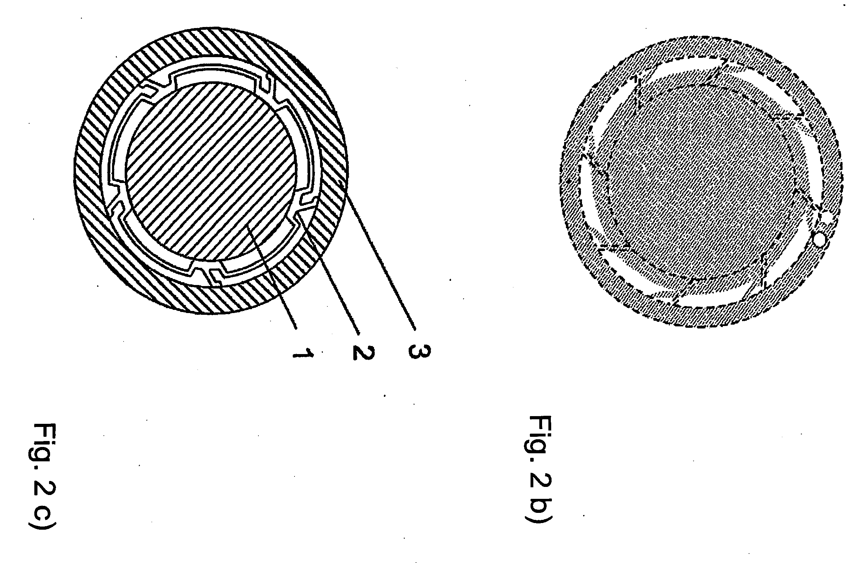

- Figur 2 b): Skizze der Trägheitsantriebsvorrichtung aus Figur 2a in der Seitenansicht mit nach Beaufschlagung mit einer elektrischen Spannung verschobenen Umlenkeinheit;
- Figur 2 c): Skizze einer Trägheitsantriebsvorrichtung in der Seitenansicht mit piezoelektrischer Scheibe als zentrales Antriebselement, ringförmigen Rotor und zwischenliegender ringförmigen Umlenkeinheit;

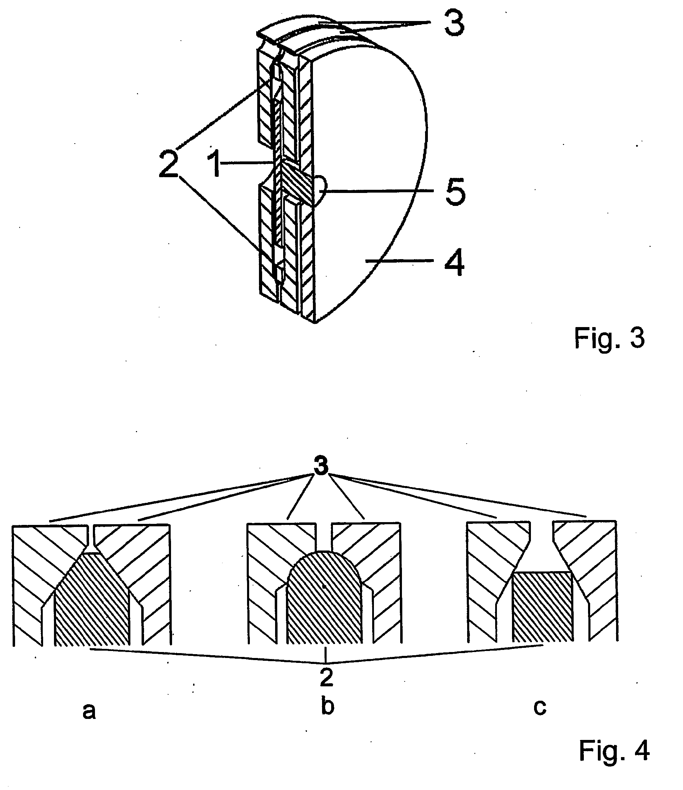

- Figur 3: rotatorische Trägheitsantriebsvorrichtung mit piezoelektrischer Scheibe als zentraler Aktor und scheibenförmigen Rotorelementen und scheibenförmigem Stator;
- Figur 4a)-c): beispielhafte Ausführungsformen für die Reibkontakte zwischen den Reibpartnern der Trägheitsantriebsvorrichtung aus Figur 3;

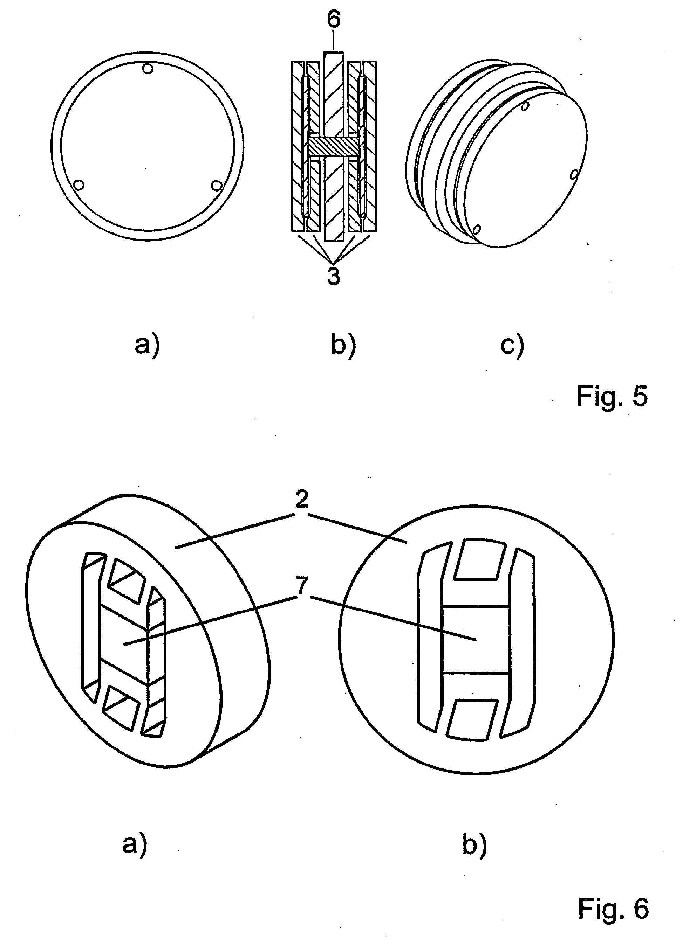

- Figur 5: Ausführungsform der rotatorischen Trägheitsantriebsvorrichtung aus Figur 3 mit zwei piezoelektrischen Scheiben als zentrale Antriebselemente;
- Figur 6: nicht-erfindungsgemäßes Beispiel einer rotatorischen Trägheitsantriebsvorrichtung mit einem Stapelpiezoelement als zentrales

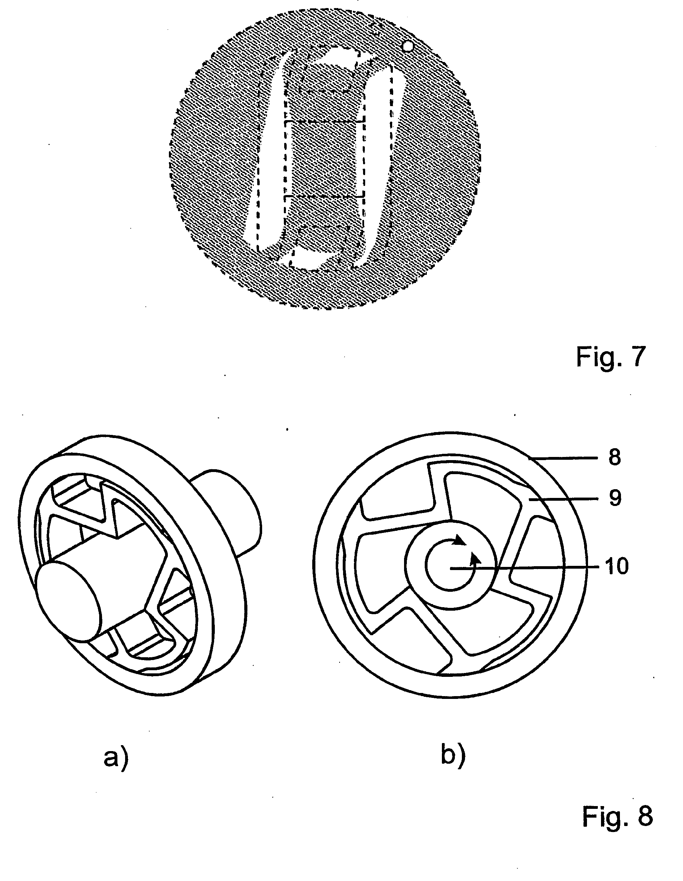

- Figur 7: Antriebselement; Skizze der Trägheitsantriebsvorrichtung aus Figur 6 in Seitenansicht mit nach Beaufschlagung mit einer elektrischen Spannung verschobener Umlenkeinheit;
- Figur 8a)+b): perspektivische Ansicht und Seitenansicht eines nicht-erfindungsgemäßen Beispiels der rotatorischen Trägheitsantriebsvorrichtung mit piezoelektrischem Ring als Antriebselement und einer innen laufenden Welle als Rotor;

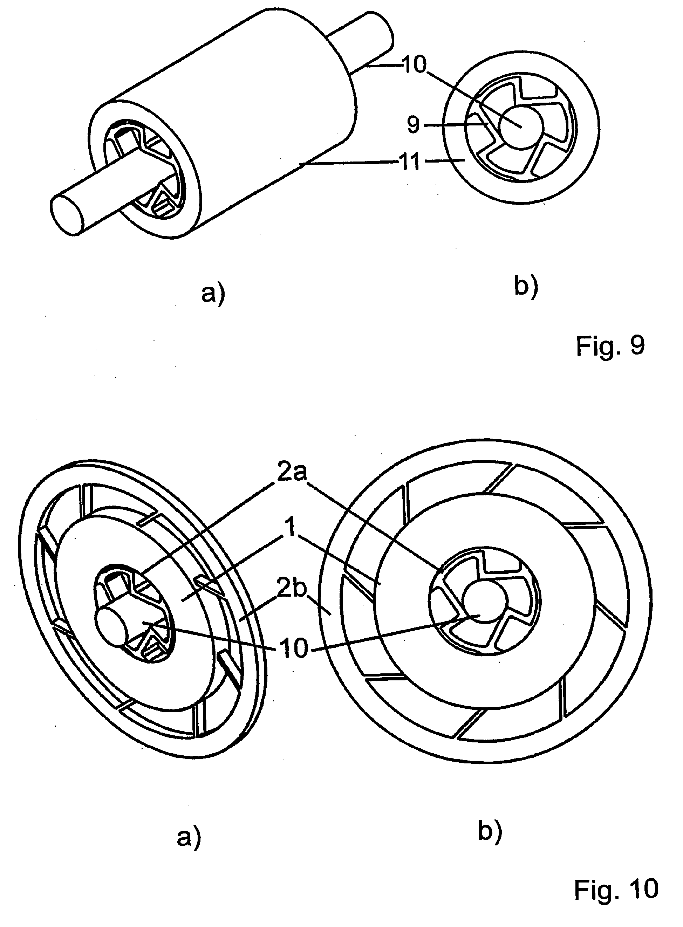

- Figur 9a)+b): perspektivische Ansicht und Seitenansicht eines nicht-erfindungsgemäßen Beispiels der rotatorischen Trägheitsvorrichtung ähnlich zu Figur 8 mit piezoelektrischem Rohr als Antriebselement und einer innen laufenden Welle als Rotor;
- Figur 10a)+b): perspektivische Ansicht und Seitenansicht eines nicht-erfindungsgemäßen Beispiels der rotatorischen Trägheitsantriebsvorrichtung mit einer Kombination eines inneren Antriebs entsprechend Figur 8 und äußeren Antriebs entsprechend Figur 2 durch eine zentrale Piezoscheibe als Aktor.

Figur 1 a) lässt den prinzipiellen Aufbau eines eingangs beschriebenen Impact-Drive-Antriebs erkennen, der aus zwei Körpern A und B besteht, die über eine Piezokeramik C verbunden sind. Der Körper A steht in reibschlüssiger Verbindung mit einer Ebene. So lange die Beschleunigung des Körpers B, die durch die Piezokeramik C erzwungen wird, verhältnismäßig gering ist, wird der Körper A aufgrund der Reibung nicht über die Oberfläche rutschen. Bei einer großen Beschleunigung wird der Körper A allerdings über die Oberfläche gleiten, da die Trägheitskraft des Körpers B größer ist als die Reibungskraft.

Figur 1 b) lässt das Prinzip von Slip-Stick-Antrieben erkennen, bei denen ein Aktor D auf einer Seite an einer nicht beweglichen Masse befestigt ist. Der Körper E steht mit dem Aktor D in Reibkontakt. Wenn der Aktor D durch das Anlegen einer sich allmählich ändernden Spannung gering beschleunigt wird, so wird der Körper E mitbewegt. Bei einer großen Beschleunigung des Aktors D ist die Trägheitskraft des Körpers E größer als die Haftreibung, so dass es zu einer relativen Bewegung zwischen dem Körper E und dem Aktor D kommt.

Figur 1 c) lässt den zum Antrieb der dargestellten Trägheitsantriebe üblichen Spannungsverlauf über die Zeit erkennen. Es wird deutlich, dass zunächst eine sich langsam ändernde Spannung angelegt wird, die nach Erreichen einer maximalen Spannung abrupt auf einen Ausgangswert reduziert wird. In dieser Phase wird eine hohe Beschleunigung des Stators erreicht.

Figur 2 a) bis c) zeigen Skizzen einer hier nicht zur Erfindung gehörenden rotatorischen Trägheitsantriebsvorrichtung in Seitenansicht. Die in der Figur 2 a) dargestellte Trägheitsantriebsvorrichtung besteht aus einer piezoelektrischen Scheibe 1, die bei Beaufschlagung mit einer Spannung ihren Durchmesser ändert. Diese Scheibe 1 kann monolithisch aufgebaut sein oder aus mehreren Schichten bestehen, wenn größere Ansteuerspannungen vermieden werden sollen. Bei der Veränderung des Durchmessers der piezoelektrischen Scheibe 1, die den Aktor bildet, werden die an der piezoelektrischen Scheibe 1 befestigten Ausleger einer Umlenkeinheit 2 gestaucht und verbogen. Dieses geschieht über den gesamten Umfang der piezoelektrischen Scheibe 1, so dass es zu keiner nennenswerten exzentrischen Bewegung kommt. Infolgedessen wird lediglich der äußere Ring der Umlenkeinheit 2 um das Zentrum verdreht.

Über den Winkel, mit dem die Streben der Umlenkeinheit 2 auf die piezoelektrische Scheibe 1 stoßen, kann eingestellt werden, inwieweit die Bewegungen der piezoelektrischen Scheibe 1 in eine Rotationsbewegung des äußeren Ringes umgelenkt wird. Je radialer die Position der Streben der Umlenkeinheit 2 ist, desto größer ist die Rotationsbewegung bei einer Durchmesseränderung der piezoelektrischen Scheibe 1. Der äußere Ring stellt eine den Rotor 3 bildenden weiteren Körper dar, der nach Überwindung der Haftreibung zwischen der Umlenkeinheit 2 und dem Rotor 3 um das Zentrum herum gedreht werden kann. Bei einer verhältnismäßig langsamen Durchmesseränderung der piezoelektrischen Scheibe 1 wird der Rotor 3 mit der Umlenkeinheit 2 mitbewegt. Bei einer verhältnismäßig schnellen Durchmesseränderung hingegen, ist die Trägheitskraft des äußeren Rings, d. h. des Rotors 3 größer als die Reibungskraft zwischen der Umlenkeinheit 2 und dem äußeren Ring, so dass der äußere Ring durchrutscht. Somit kann, dem Slip-Stick-Prinzip entsprechend, ein rotatorischer Slip-Stick-Antrieb realisiert werden.

Figur 2 b) zeigt die Verdrehung der Umlenkeinheit 2 um das Zentrum, wenn der Durchmesser der piezoelektrischen Scheibe 1 variiert. Die Ausgangslage ist durch die gestrichelten Linien dargestellt. Die feinschraffierten Flächen repräsentieren den Zustand nach der Vergrößerung des Durchmessers. Der in der Figur 2 a) skizzenhaft dargestellte anzutreibende Rotor 3 ist in der Figur 2 b) der Übersicht halber nicht dargestellt. Die resultierende rotatorische Bewegung wird durch zwei Markierung am Umfang verdeutlicht. Der gestrichelte Kreis stellt die Ausgangslage dar, während der durchgezogene Kreis die Position nach der Vergrößerung des Durchmessers der piezoelektrischen Scheibe 1 zeigt.

Die in der Figur 2 c) dargestellte rotatorische Trägheitsantriebsvorrichtung besteht aus einer piezoelektrischen Scheibe 1, die bei Beaufschlagung mit einer Spannung ihren Durchmesser ändert. Diese piezoelektrische Scheibe 1 kann monolithisch aufgebaut sein oder aus mehreren Schichten bestehen, wenn größere Ansteuerspannungen vermieden werden sollen. Die Bewegung der piezoelektrischen Scheibe 1 wird über eine mechanische Umlenkeinheit 2 umgelenkt und auf mehrere Reibkontakte verteilt, die mit dem zu rotierenden zylinderförmigen Rotor 3 in Reibkontakt stehen, so dass die dem Slip-Stick-Antrieben eigene Bewegung möglich ist. Interessant ist, dass die Verformung der piezoelektrischen Scheibe 1 über den gesamten Umfang auf mehrere Reibkörper aufgeteilt wird, die jeweils einen Anteil an dem gesamten Drehmoment des Antriebs aufbringen.

In der Figur 2 c) ist deutlich zu erkennen, dass die Umlenkeinheit 2 mindestens ein auf dem zur Verbindung der Stege mit dem Grundkörper gegenüberliegenden Ende der Stege mit den Stegen verbundene Reibelemente mit einer Reibfläche hat, die mit dem Rotor 3 zusammenwirkt.

Figur 3 stellt stark vereinfacht eine von vielen möglichen Konstellationen der rotatorischen Trägheitsantriebsvorrichtung dar. Der Aktor ist wiederum eine im Umfang veränderliche piezoelektrische Scheibe 1, während die Umlenkeinheit 2 das in der Figur 2 a) skizzierte Bauteil mit Streben ist, das mit der piezoelektrischen Scheibe 1 verbunden ist. Mit dieser speziellen umlenkeinheit 2 ist der in Figur 3 gezeigte antreib kein Ausführungsbeispiel der Erfindung. Der Rotor 3 ist über einen Reibkontakt mit der Umlenkeinheit 2 verbunden. Der Stator 4 ist als scheibenförmige Platte ausgebildet, die relativ zu der piezoelektrischen Scheibe 1 fixiert ist, beispielsweise durch eine Welle 5. Im Betrieb kann eine Relativbewegung zwischen den Rotorelementen 3 und dem Stator 4 erzeugt werden. Es kann eine Vorrichtung vorgesehen werden, die es ermöglicht, die Anpresskraft zwischen den Rotorelementen 3 und der Umlenkeinheit 2 einzustellen. Über die Anpresskraft wird bestimmt, welche Momente der Antrieb übertragen kann. Eine solche Vorrichtung zur Erzeugung des Anpressdrucks ist der Übersicht halber nicht dargestellt. Es gibt mannigfaltige Möglichkeiten, die Anpresskraft einzustellen. Beispielsweise können Feder, Schrauben oder Festkörpergelenke eingesetzt werden.

Figuren 4 a) bis c) zeigen beispielhaft und skizzenhaft einige erfindungsgemäße Varianten zur Gestaltung des Kontaktbereichs zwischen der Umlenkeinheit 2 und den Rotorelementen 3. Es ist erkennbar, dass der in der Figur 3 dargestellte Rotor 3 aus zwei drehbar um eine Achse gelagerten, im Abstand zueinander angeordneten scheibenförmigen Rotorelementen 3 gebildet ist, die im radial äußeren Bereich einen einanderzulaufenden geneigten oder gekrümmten Abschnitt haben. Die ringförmige Umlenkeinheit 2 sitzt auf dem Außenumfang des Aktors 1 und steht mit radial nach außen ragenden Stegen im reibschlüssigen Eingriff mit dem geneigten oder gekrümmten Abschnitt der Rotorelemente 3.

Die in den Figuren 4 a) und b) dargestellten Ausführungsformen sind zur Erzeugung von Flächenkontakten geeignet. In der Figur 4 c) ist eine beispielhafte Konfiguration zur Erzeugung von Linienkontakten skizziert. Eine Konfiguration zur Erzeugung von Punktkontakten ist nicht dargestellt, kann aber gleichermaßen realisiert werden.

Figuren 5 a) bis c) lassen eine Seitenansicht, Querschnittsansicht und perspektivische Ansicht einer Ausführungsform der rotatorischen Trägheitsantriebsvorrichtung erkennen, bei der mehr als eine zentrale Piezoscheibe als Aktor 1 verwendet wird. Im Gegensatz zu der in Figur 3 dargestellten Konstellation mit nur einer Piezoscheibe ohne eine weitere Lagerung kann hierzu z. B. eine erhöhte Seitensteifigkeit und ein höheres Drehmoment erzeugt werden. Dies wird dadurch erreicht, dass zwei sich gegenüberliegende Rotoren 3 mit zwischenliegendem scheibenförmigen Stator 6 vorgesehen sind. Die Rotoren 3 sind drehbar um die Welle bzw. Achse 5 angeordnet.

Im Betrieb bewegen sich die Rotoren 3 gegenüber dem Stator 6 um die zentrale Achse 5. Falls lediglich die Seitensteifigkeit erhöht werden soll, kann statt einer zweiten Antriebseinheit auch eine stabile Lagerung verwendet werden.

Figuren 6 a) und b) zeigen eine andere, nicht zur Erfindung gehörende Ausführungsform der rotatorischen Trägheitsantriebsvorrichtung in perspektivischer Ansicht und Seitenansicht. In diesem Ausführungsbeispiel wird anstelle der bislang beschriebenen Piezoscheiben ein rechteckförmiger monolithischer piezokeramischer Aktor 1 oder ein Stapelpiezoelement 7 verwendet. Wird das Piezoelement 7 mit einer Spannung beaufschlagt, so kommt es zu einer Relativrotation zwischen dem Piezoelement 7 und der Umlenkeinheit 7. Wiederum kann durch Einstellung des Winkels der Streben der Umlenkeinheit 2 zum Piezoelement 7 eingestellt werden, inwieweit und mit welcher Hebelwirkung der Hub des Piezoelements 7 in eine Rotation der Umlenkeinheit 2 übertragen werden soll.

Figur 7 lässt eine Seitenansicht des Umlenkelementes 2 aus Figur 6 mit innenliegendem Stapelpiezoelement 7 erkennen. Die Ausgangslage ist durch die gestrichelten Linien dargestellt. Die feinschraffierten Flächen repräsentieren den Zustand nach der Ausdehnung des Stapelpiezoelementes 7. Die resultierende rotatorische Bewegung der Umlenkeinheit 2 wird durch die zwei Markierungen am Umfang verdeutlicht.

Figuren 8 a) und b) lassen eine andere, nicht zur Erfindung gehörende Ausführungsform der rotatorischen Trägheitsantriebsvorrichtung in perspektivischer Ansicht und Seitenansicht erkennen. Als Aktor 1 wird ein Piezoring verwendet. Wird der Piezoring 8 mit einer Spannung beaufschlagt, so variiert dessen innerer und äußerer Durchmesser. Mit einem solchen Piezoring 8 können Antriebe genauso realisiert werden, wie bisher oben für die Piezoscheibe beschrieben wurde. Es ist aber auch möglich, eine in den inneren Kreis eingebrachte Umlenkeinheit 9 so zu verformen, dass ein zentral gelagerter Stab 10 angetrieben wird, der den Rotor bildet. Wiederum kann durch eine geeignete Wahl der Winkel der Ausleger der Umlenkeinheit 2 eingestellt werden, welche Hebelwirkung erzeugt werden soll.

Figuren 9 a) und b) lassen eine andere, nicht zur Erfindung gehörende Ausführungsform der rotatorischen Trägheitsantriebsvorrichtung in perspektivischer Ansicht und Seitenansicht erkennen. Anstelle des in der Figur 8 dargestellten Piezorings wird als Aktor ein Piezoröhrchen 11 verwendet. Wenn dieses Piezoröhrchen 11 mit einer Spannung beaufschlagt wird, so ändert sich wiederum der innere und äußere Durchmesser. Durch Einbringen der Umlenkeinheit 9 analog zu dem in der Figur 8 dargestellten Aufbau in das Piezoröhrchen 11 kann eine Rotation erzielt werden. Dadurch, dass eine solche Umlenkeinheit 9 in beide Enden des Piezoröhrchens 11 eingebracht werden kann, ist eine relativ stabile Trägheitsantriebsvorrichtung realisierbar. Um eine axiale Ausdehnung des Piezoröhrchens 11 zu verhindern, kann die Elektrode im Inneren oder Äußeren des Piezoröhrchens 11 segmentiert werden, so dass der mittlere Teil des Piezoröhrchens 11 nicht mit einem elektrischen Feld beaufschlagt wird.

Figuren 10 a) und b) lassen eine weitere, nicht zur Erfindung gehörende Ausführungsform der rotatorischen Trägheitsantriebsvorrichtung in perspektivischer Ansicht und Seitenansicht erkennen. Der Aktor 1 ist als zentraler Piezoring ausgeführt, an dessen inneren Umfang eine erste Umlenkeinheit 2 a eingreift, die mit einer Welle 10 zur Rotation derselben in Verbindung steht. Am Außenumfang des Aktors 1 ist eine weitere Umlenkeinheit 2 b in der Figur 2 dargestellten Art vorgesehen, die als Stator fungiert und gleichzeitig die radiale Ausdehnung des Aktors 1 in eine rotatorische Bewegung umlenkt. Die Ausführungsform der Trägheitsantriebsvorrichtung ist somit eine Kombination der in den Figuren 2 und 8 dargestellten Ausführungsform. Die Veränderung des inneren und äußeren Durchmessers des Piezorings bei Beaufschlagung mit einer Spannung wird somit ausgenutzt, indem die bereits oben beschriebenen mechanischen Komponenten und insbesondere die Umlenkeinheiten 2 a und 2 b zusammen eingesetzt werden.

## Patentansprüche

1. Rotatorische Trägheitsantriebsvorrichtung mit einem Stator (4) und einem relativ zum Stator (4) beweglich gelagerten Rotor (3), mindestens einem mit dem Stator (4) verbundenen Aktor (1) und einer Steuerungseinheit zur Ansteuerung des Aktors (1), einer Umlenkeinheit (2) zwischen Stator (4) und Rotor (3), die in reibschlüssiger Verbindung mit einer Reibfläche des Rotors (3) steht und starr mit dem Aktor (1) gekoppelt und zur Umlenkung der Bewegungsrichtung des mindestens einen Aktors (1) in eine Rotationsbewegung eingerichtet ist, wobei die Steuerungseinheit zur asymmetrischen Ansteuerung des mindestens einen Aktors (1) derart eingerichtet ist, dass der Rotor (3) Bewegungen in Folge geringer Beschleunigungen der Umlenkeinheit (2) aufgrund des Reibschlusses folgt und bei hohen Beschleunigungen der Umlenkeinheit (2) unter Überwindung des Reibschlusses nicht folgt,
**dadurch gekennzeichnet, dass**
der Rotor (3) aus zwei drehbar um eine Achse (5) gelagerten, im Abstand zueinander angeordneten scheibenförmigen Rotorelementen (3) gebildet ist,
die im radial äußeren Bereich einen einander zulaufenden geneigten oder gekrümmten Abschnitt aufweisen, ein scheibenförmiger, im Durchmesser veränderlicher Aktor (1) zentrisch an der Achse (5) befestigt ist und eine ringförmige Umlenkeinheit (2) auf dem Aussenumfang des Aktors (1) sitzt, die radial oder diagonal nach außen ragende Stege im reibschlüssigen Eingriff mit dem geneigten oder gekrümmten Abschnitt der Rotorelemente (3) aufweist.

2. Rotatorische Trägheitsantriebsvorrichtung nach Anspruch 1,
**gekennzeichnet durch**
zwei sich gegenüberliegenden mit zwischenliegendem scheibenförmigen Stator (4) drehbar um die Achse angeordneten Rotoren (3).

3. Rotatorische Trägheitsantriebsvorrichtung nach Anspruch 1 oder 2,
**dadurch gekennzeichnet, dass**
eine Symmetrieachse des mindestens einen Aktors (1) und die Rotationsachse des Rotors (3) zusammenfallen.

4. Rotatorische Trägheitsantriebsvorrichtung nach einem der vorhergehenden Ansprüche,
**dadurch gekennzeichnet, dass**
die Bewegungsrichtung des Aktors (1) radial ausgerichtet ist.

5. Rotatorische Trägheitsantriebsvorrichtung nach einem der vorhergehenden Ansprüche,
**dadurch gekennzeichnet, dass**
die Umlenkeinheit (2) derart ausgebildet ist, dass bei jeder Hublage des mindestens einen Aktors (1) eine reibschlüssige Verbindung zwischen Rotor (3) und Umlenkeinheit (2) besteht.

6. Rotatorische Trägheitsantriebsvorrichtung nach einem der vorhergehenden Ansprüche,
**gekennzeichnet durch**
eine mit dem Rotor (3) und/oder der Umlenkeinheit (2) gekoppelte Anpressdruckeinheit zur Aufbringung eines definierten Anpressdrucks zwischen Rotor (3) und Umlenkeinheit (2).

7. Rotatorische Trägheitsantriebsvorrichtung nach einem der vorhergehenden Ansprüche,
**dadurch gekennzeichnet, dass**
die Umlenkeinheit (2) einen Grundkörper und integral mit dem Grundkörper verbundene Stege hat, die sich in eine diagonale Richtung im Winkel zur radialen oder tangentialen Richtung der Rotationsachse der Trägheitsantriebsvorrichtung zum Rotor (3) hin erstrecken.

8. Rotatorische Trägheitsantriebsvorrichtung nach Anspruch 7,
**dadurch gekennzeichnet, dass**
die Umlenkeinheit (2) mindestens ein auf dem zur Verbindung der Stege mit dem Grundkörper gegenüberliegenden Ende der Stege mit den Stegen verbundenes Reibelement mit einer Reibfläche hat, die mit dem Rotor (3) zusammenwirkt.

9. Rotatorische Trägheitsantriebsvorrichtung nach einem der Ansprüche 7 oder 8,
**dadurch gekennzeichnet, dass**
die Stege eine in der diagonalen Richtung höhere Federsteifigkeit aufweisen als senkrecht zur diagonalen Richtung.

10. Rotatorische Trägheitsantriebsvorrichtung nach einem der vorhergehenden Ansprüche,
**dadurch gekennzeichnet, dass**
der mindestens eine Aktor (1) ein piezokeramisches, elektrostriktives oder magnetostriktives Aktorelement ist.

11. Rotatorische Trägheitsantriebsvorrichtung nach einem der vorhergehenden Ansprüche,
**dadurch gekennzeichnet, dass**
die Umlenkeinheit (2) zur Umleitung des Hubs des Aktors (1) auf mehrere Reibkontakte ausgebildet ist.

## Claims

1. Rotatory inertia drive device comprising a stator (4) and a rotor (3) mounted movably relative to the stator (4), at least one actuator (1) connected to the stator (4), and a control unit for driving the actuator (1), a diverter unit (2) between the stator (4) and the rotor (3), which is frictionally connected to a friction surface of the rotor (3) and is rigidly coupled to the actuator (1) and is adapted to divert the direction of movement of the at least one actuator (1) into a rotational movement, wherein, for asymmetrically driving the at least one actuator (1), the control unit is adapted in such a way that the rotor (3) follows movements resulting from slow accelerations of the diverter unit (2) due to the frictional contact and, if the accelerations are fast, does not follow the diverter unit (2) by overcoming the frictional contact,
**characterized in that**
the rotor (3) is formed of two disc-shaped rotor elements (3) which are mounted rotatably about an axle (5) and are spaced apart from each other, and which have an inclined or curved portion approaching each other in the radially outer region, a disc-shaped actuator (1) with a variable diameter is centrically mounted on the axle (5), and an annular diverter unit (2) sits on the outer circumference of the actuator (1) and has webs, which project radially or diagonally in an outward direction, frictionally engaged with the inclined or curved portion of the rotor elements (3).

2. Rotatory inertia drive device according to claim 1,
**characterized by**
two opposing rotors (3) which are arranged rotatably about the axle, with a disc-shaped stator (4) therebetween.

3. Rotatory inertia drive device according to claim 1 or 2,
**characterized in that**
an axis of symmetry of the at least one actuator (1) and the axis of rotation of the rotor (3) coincide.

4. Rotatory inertia drive device according to one of the preceding claims,
**characterized in that**
the direction of movement of the actuator (1) is oriented radially.

5. Rotatory inertia drive device according to one of the preceding claims,
**characterized in that**
the diverter unit (2) is adapted in such a way that in each stroke position of the at least one actuator (1) the rotor (3) and the diverter unit (2) are frictionally connected.

6. Rotatory inertia drive device according to one of the preceding claims,
**characterized by**
a contract pressure unit coupled to the rotor (3) and/or the diverter unit (2) to apply a defined contact pressure between the rotor (3) and the diverter unit (2).

7. Rotatory inertia drive device according to one of the preceding claims,
**characterized in that**
the diverter unit (2) has a base body and webs integrally connected to the base body, which extend to the rotor (3) in a diagonal direction at an angle to the radial or tangential direction of the axis of rotation of the inertia drive device.

8. Rotatory inertia drive device according to claim 7,
**characterized in that**
the diverter unit (2) has at least one friction element which is connected to the webs on the opposite end of the webs for connection of the webs to the base body and has a friction surface which interacts with the rotor (3).

9. Rotatory inertia drive device according to one of claims 7 or 8,
**characterized in that**
the webs have a greater spring rigidity in the diagonal direction than perpendicular to the diagonal direction.

10. Rotatory inertia drive device according to one of the preceding claims,
**characterized in that**
the at least one actuator (1) is a piezoceramic, electrostrictive or magnetostrictive acuator element.

11. Rotatory inertia drive device according to one of the preceding claims,
**characterized in that**
the diverter unit (2) is adapted to divert the stroke of the actuator (1) to several frictional contacts.

## Revendications

1. Dispositif d'entraînement inertiel rotatif comprenant un stator (4) et un rotor (3) monté mobile par rapport au stator (4), au moins un actionneur (1) relié au stator (4) et une unité de commande pour piloter l'actionneur (1), une unité de déviation (2) entre le stator (4) et le rotor (3), qui est en liaison de coopération à friction avec une surface de friction du rotor (3) et qui est couplée rigidement avec l'actionneur (1), et qui est organisée pour dévier la direction de déplacement dudit au moins un actionneur (1) en un mouvement rotatif, dans lequel l'unité de commande est organisée pour un pilotage asymétrique dudit au moins un acteur (1) de telle façon que le rotor (3) suit en raison de la coopération à friction des mouvements dus à de faibles accélérations de l'unité de déviation (2) et qu'il ne suit pas les mouvements lors de fortes accélérations de l'unité de déviation (2) en surmontant la coopération à friction,
**caractérisé en ce que**
le rotor (3) est formé par deux éléments de rotor (3) en forme de disque montés rotatifs autour d'un axe (5) et agencés à distance l'un de l'autre, qui présentent dans la région radialement extérieure un tronçon incliné ou incurvé convergeant l'un vers l'autre, un actionneur en forme de disque à diamètre variable (1) est fixé de façon centrée sur l'axe (5), et une unité de déviation annulaire (2) repose sur la périphérie extérieure de l'actionneur (1), laquelle comprend des barrettes dressées radialement ou en diagonale vers l'extérieur qui sont en engagement de coopération à friction avec le tronçon incliné ou incurvé des éléments de rotor (3).

2. Dispositif d'entraînement inertiel rotatif selon la revendication 1,
**caractérisé par** deux rotors mutuellement opposés (3), agencés en rotation autour de l'axe avec un stator en forme de disque (4) disposé entre eux.

3. Dispositif d'entraînement inertiel rotatif selon la revendication 1 ou 2,
**caractérisé en ce qu'**un axe de symétrie dudit au moins un actionneur (1) et l'axe de rotation du rotor (3) coïncident.

4. Dispositif d'entraînement inertiel rotatif selon l'une des revendications précédentes,
**caractérisé en ce que** la direction de déplacement de l'actionneur (1) est orientée radialement.

5. Dispositif d'entraînement inertiel rotatif selon l'une des revendications précédentes,
**caractérisé en ce que** l'unité de déviation (2) est réalisée de telle façon que pour chaque situation de course dudit au moins un actionneur (1) il existe une liaison de coopération à friction entre le rotor (3) et l'unité de déviation (2).

6. Dispositif d'entraînement inertiel rotatif selon l'une des revendications précédentes,
**caractérisé par** une unité de pressage couplée avec le rotor (3) et/ou avec l'unité de déviation (2) pour appliquer une pression de pressage définie entre le rotor (3) et l'unité de déviation (2).

7. Dispositif d'entraînement inertiel rotatif selon l'une des revendications précédentes,
**caractérisé en ce que** l'unité de déviation (2) comprend un corps de base et des barrettes, reliées de manière intégrale avec le corps de base, qui s'étendent dans une direction en diagonale sous un angle par rapport à la direction radiale ou tangentielle de l'axe de rotation du dispositif d'entraînement inertiel en direction du rotor (3).

8. Dispositif d'entraînement inertiel rotatif selon la revendication 7,
**caractérisé en ce que** l'unité de déviation (2) possède au moins un élément de friction avec une surface de friction qui coopère avec le rotor (3), l'élément de friction étant relié aux barrettes à l'extrémité des barrettes opposée à celle pour la liaison des barrettes au corps de base.

9. Dispositif d'entraînement inertiel rotatif selon l'une des revendications 7 ou 8,
**caractérisé en ce que** les barrettes présentent une raideur élastique plus élevée en direction diagonale qu'en direction perpendiculaire à la diagonale.

10. Dispositif d'entraînement inertiel rotatif selon l'une des revendications précédentes,
**caractérisé en ce que** ledit au moins un actionneur (1) est un élément actionneur piézocéramique, électrostrictif ou magnétostrictif.

11. Dispositif d'entraînement inertiel rotatif selon l'une des revendications précédentes,
**caractérisé en ce que** l'unité de déviation (2) est réalisée pour dévier la course de l'actionneur (1) vers plusieurs contacts à friction.
